(19) **Europäisches Patentamt**

**European Patent Office**

**Office européen des brevets**

(11) **EP 1 318 310 B1**

(12) **EUROPEAN PATENT SPECIFICATION**

(45) Date of publication and mention
of the grant of the patent:
**31.08.2005 Bulletin 2005/35**

(51) Int Cl.⁷: **F04D 19/04**

(21) Application number: **02258202.7**

(22) Date of filing: **28.11.2002**

(54) **Magnetic bearing control device**

Magnetlagersteuerungsvorrichtung

Organe de commande à palier magnétique

(84) Designated Contracting States:
**DE FR**

(30) Priority: **04.12.2001 JP 2001369694**

(43) Date of publication of application:
**11.06.2003 Bulletin 2003/24**

(73) Proprietor: **BOC Edwards Japan Limited
Tokyo (JP)**

(72) Inventor: **Kawashima, Toshiaki,
BOC Edwards Technologies Ltd.
Narashino-shi, Chiba (JP)**

(74) Representative: **Sturt, Clifford Mark et al
Miller Sturt Kenyon
9 John Street
London WC1N 2ES (GB)**

(56) References cited:
**EP-A- 1 036 951      EP-A- 1 046 821
WO-A-99/53974      US-A- 5 961 291
US-A- 6 015 275**

**Description**

The present invention relates to a magnetic bearing control device and, in particular, to a magnetic bearing control device improving responsiveness of an electromagnet current.

A magnetic bearing is used in a rotary apparatus such as a turbo-molecular pump for use in a semiconductor manufacturing process. A conventional magnetic bearing exciting circuit will be described on the basis of a construction example of the magnetic bearing of a turbo-molecular pump.

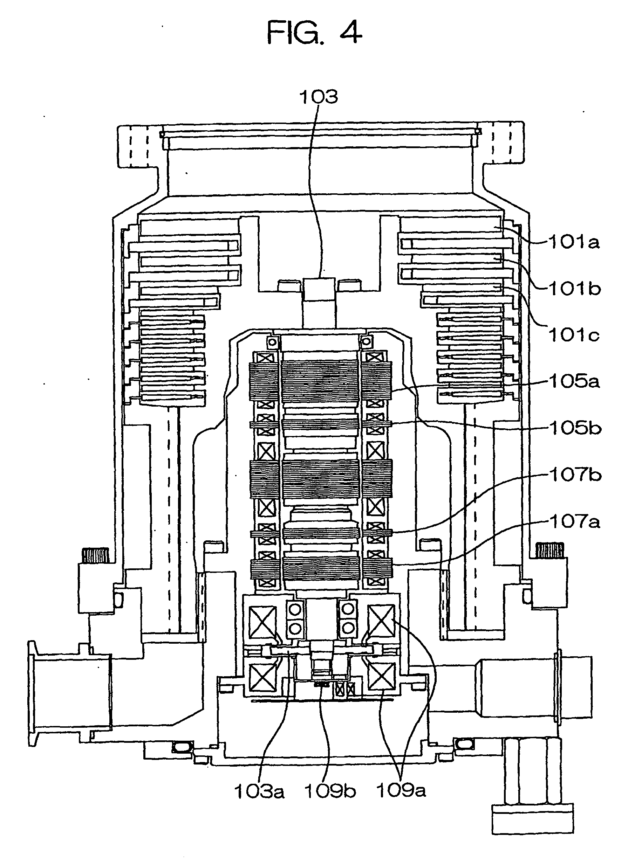

Fig. 4 is a sectional view showing a turbo-molecular pump as a construction example of a magnetic bearing.

In Fig. 4, the turbo-molecular pump is equipped with a rotating body 103 provided with a plurality of rotary vanes 101a, 101b, 101c, ... arranged in a number of stages and serving as turbine blades for discharging gas.

To rotatably support the rotating body 103, there are arranged an upper radial electromagnet 105a, a lower radial electromagnet 107a, and an axial electromagnet 109a to thereby form a magnetic bearing. Further, there are provided an upper radial sensor 105b, a lower radial sensor 107b, and an axial sensor 109b.

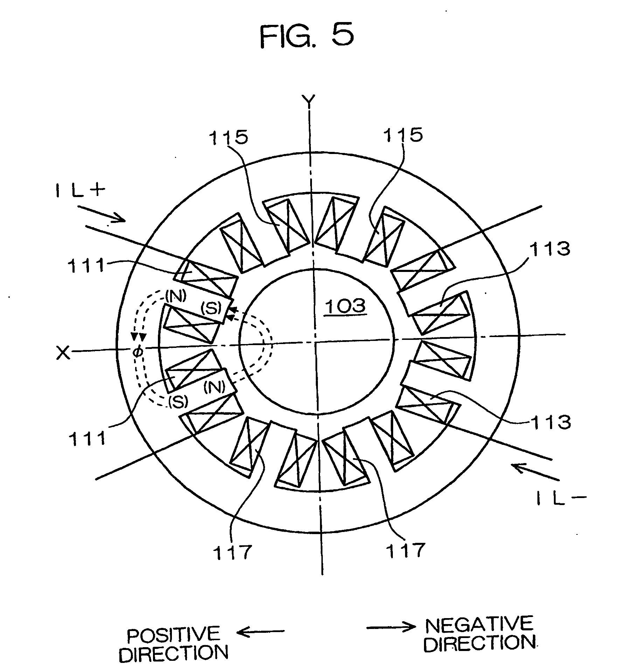

In each of the upper radial electromagnet 105a and the lower electromagnet 107a, four electromagnets are formed by electromagnet windings constructed as shown in the cross-sectional view of Fig. 5. These four electromagnets are opposed in twos to form a magnetic bearing of two axes: the X-axis and Y-axis.

More specifically, there is realized an opposite-polarity arrangement with electromagnet windings 111 wound around two adjacent core protrusions constituting one pair to thereby form one electromagnet. This electromagnet constitutes one pair together with the electromagnet formed by the electromagnet windings 113 wound around the core protrusions opposed thereto with the rotating body 103 therebetween, each attracting the rotating body 103 in the positive direction or the negative direction with respect to the X-axis.

Similarly, regarding the Y-axis direction orthogonal to the X-axis, one pair is formed as electromagnets opposed to each other with respect to the Y-axis direction using two electromagnet windings 115 and two electromagnet windings 117 opposed thereto.

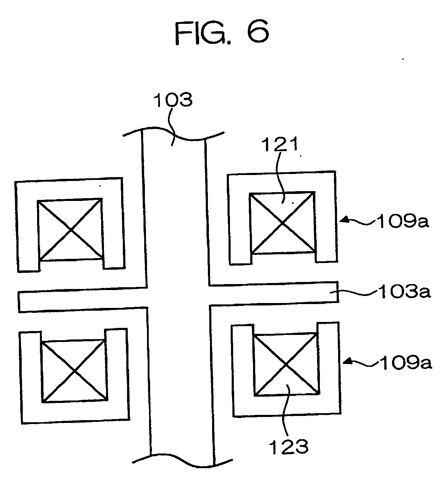

As shown in the longitudinal sectional view in Fig. 6, the axial electromagnets 109a are formed as one pair by two electromagnet windings 121 and 123 with the armature 103a of the rotating body 103 therebetween. The two electromagnets 109a respectively formed by the electromagnet windings 121 and 123 apply an attracting force to the armature 103a in the positive direction or the negative direction with respect to the rotation axis.

The upper radial sensor 105b and the lower radial sensor 107b consist of four sensing coils corresponding to the electromagnets 105a and 107a and arranged in the X- and Y-axis directions, and are adapted to detect a radial displacement of the rotating body 103. The axial sensor 109b detects an axial displacement of the rotating body 103. These sensors are constructed so as to transmit their respective detection signals to a magnetic bearing control device (not shown).

On the basis of these sensor detection signals, the magnetic bearing control device individually adjusts through PID control or the like the attracting forces of the ten electromagnets constituting the upper radial electromagnet 105a, the lower radial electromagnet 107a, and the axial electromagnets 109a, whereby the rotating body 103 is supported in a magnetically levitated state.

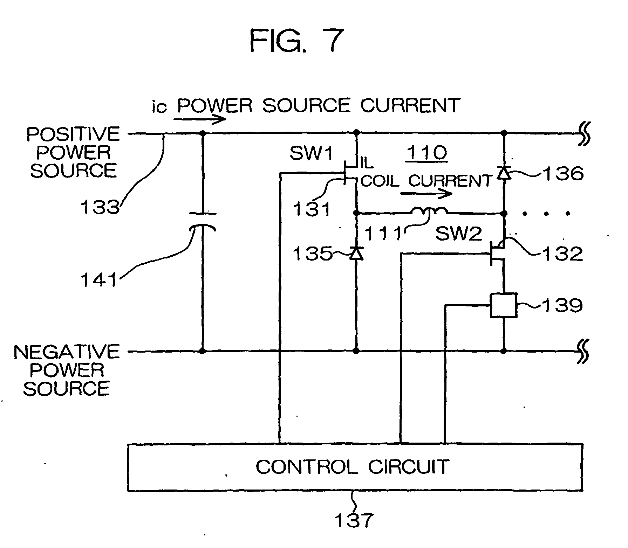

Next, a magnetic bearing exciting circuit for exciting each electromagnet of the magnetic bearing constructed as described above will be described. Fig. 7 shows an example of a magnetic bearing exciting circuit controlling an electric current flowing through electromagnet windings by a pulse width modulation system.

In Fig. 7, one end of the electromagnet winding 111 forming one electromagnet is connected to the positive electrode of a power source 133 through a transistor 131, and the other end thereof is connected to the negative electrode of the power source 133 through a transistor 132.

Then, the cathode of a current regeneration diode 135 is connected to one end of the electromagnet winding 111, and the anode thereof is connected to the negative electrode of the power source 133. Similarly, the cathode of a diode 136 is connected to the positive electrode of the power source 133, and the anode thereof is connected to the other end of the electromagnet winding 111. Between the positive electrode and the negative electrode of the power source 133, there is connected an electrolytic capacitor 141 for stabilization.

Further, an electric current detecting circuit 139 is provided on the source side of the transistor 132, and the electric current detected by this electric current detecting circuit 139 is input to a control circuit 137.

The exciting circuit 110 constructed as described above is provided in correspondence with the electromagnet winding 111, and similar exciting circuits 110 are also formed in correspondence with the other electromagnet windings 113, 115, 117, 121, and 123. Thus, in the case of a five-axis control type magnetic bearing, ten exciting circuits 110 are connected in parallel to the electrolytic capacitor 141.

In this construction, when both the transistors 131 and 132 are turned on, the electric current increases, and when both of them are turned off, the electric current decreases. When one of them is turned on, a flywheel current is maintained. By causing the flywheel current to flow, the hysteresis loss is reduced, making it possible to keep the power consumption at a low level.

Further, it is possible to reduce high frequency noise such as higher harmonic. Then, by measuring this flywheel current with the electric current detecting circuit 139, it is possible to detect electromagnet current IL flowing through the electromagnet winding 111.

The control circuit 137 compares a current command value with the detection value obtained by the electric current detecting circuit 139 to determine the pulse width within one switching period through pulse width modulation, and transmits signals to the gates of the transistors 131 and 132.

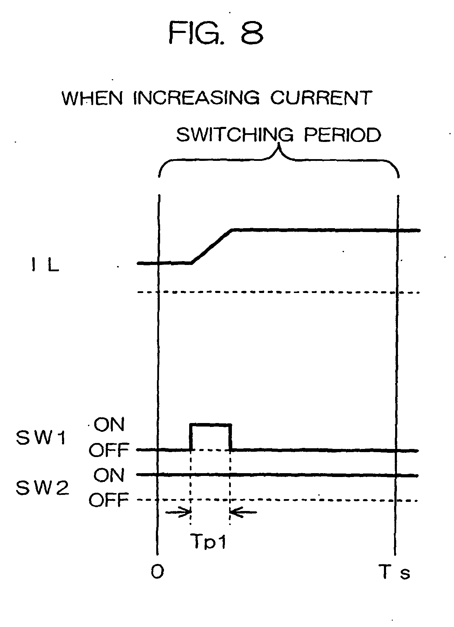

When the current command value is larger than the detection value, both the transistors 131 and 132 are turned on only once for a period of time corresponding to a pulse width time Tp within one switching period Ts (for example, Ts = 100 µs), as shown in Fig. 8. At this time, the electromagnet current IL increases.

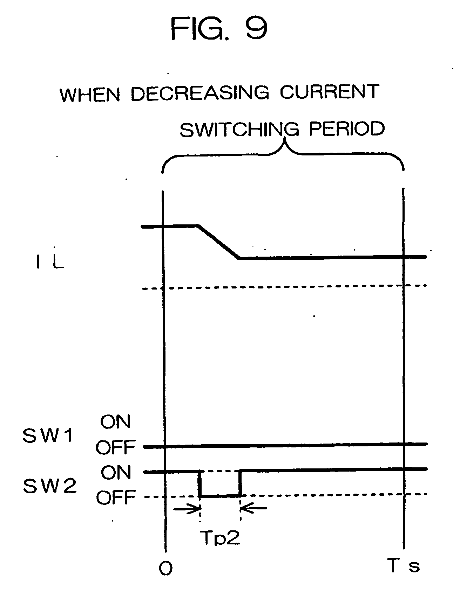

On the other hand, when the current command value is smaller than the detection value, both the transistors 131 and 132 are turned off only once for a period of time corresponding to a pulse width time Tp within one switching period Ts, as shown in Fig. 9. At this time, the electromagnet current IL decreases.

Here, the pulse width time Tp is obtained based on an electric current command value IR, an electromagnet current IL, an electromagnet inductance Lm, an electromagnet resistance Rm and a power source voltage Vd. According to Kirchhoff's Law, Equation 1 holds in a relationship between the electromagnet current IL flowing through the electromagnet winding 111 and the power source voltage Vd.

[Equation 1]

$$Lm \times \frac{dIL}{dt} = Vd - IL \times Rm$$

Accordingly, the pulse width time Tp needed to change the current value by an amount of IR - IL is obtained as expressed by Equation 2.

[Equation 2]

$$Tp = \frac{Lm \times (IR - IL)}{Vd - IL \times Rm}$$

As expressed above, when the exciting circuit 110 is digitally controlled, compensation calculation is performed using resistance and inductance values of the electromagnet winding 111 and a cable as constant values, to thereby improve the responsiveness of the electromagnet current IL with respect to the electric current command value IR (See Japanese Patent No. 3176584).

Incidentally, when the rotating body 103 of the magnetic bearing is displaced away from its target position, the steady-state current of the electromagnet winding 111 is changed, and the rotating body 103 is returned to its target position. At this time, when the steady-state current changes, the electromagnet inductance value changes significantly. Thus, even when the compensation calculation is performed using the electromagnet inductance value as the constant in the digital control, there are cases in which a compensation error occurs and the responsiveness of the electromagnet current is not improved sufficiently.

US 5961291 discloses a turbo vacuum pump having a rotating body, position detecting means, magnetic bearing means, an exiting circuit, electromagnetic current detection means and electric current error calculation means.

The present invention has been made in view of the above problem in the prior art. It is an object of the present invention to provide a magnetic bearing control device improving the responsiveness of an electromagnet current.

According to the present invention, there is provided a magnetic bearing control device comprising: a rotating body; position detection means for detecting a radial position and/or axial position of the rotating body; magnetic bearing means for controlling the radial position and/or axial position by means of an electromagnet, based on the radial position and/or axial position detected by the position detection means; an exciting circuit including switching elements for effecting connection and disconnection between the electromagnet and a power source; electromagnet current detection means for detecting the electric current flowing through the electromagnet; electric current error calculation means for calculating an electric current error occurring between the detected current value detected by the electromagnet current detection means and an electric current command value; characterised by relating means for relating in advance a coefficient for compensating the inductance of the electromagnet with the size of the electric current flowing through the electromagnet; coefficient calculation means for calculating the coefficient from the detected current value based on the relating means; compensation means for compensating the electric current error based on the coefficient calculated by the coefficient calculation means; and pulse width calculation means for calculating a pulse width used for performing pulse control on the switching elements, based on an output value compensated by the compensation means.

In the relating means, a coefficient for compensating the electromagnet inductance is related in advance with the size of the electric current flowing through the electromagnet. The relationship may be stored in a memory or the like as a characteristic curve, or may be stored in an approximated form as a line graph.

Further, the relationship may also be stored as a table. Using the established relationship, the coefficient for compensating the electromagnet inductance is calculated according to the size of the detected electromagnet current. The electric current error generated between the detected electric current value and the electric current command value is compensated according to the coefficient. Then, the pulse width is calculated based on the compensation result.

Due to this structure, the responsiveness of the electromagnet current is improved. Thus, the rotating body becomes less apt to oscillate, so that the control rigidity of the rotating body can be increased. Convergence in the case in which the rotating body is displaced by external turbulence is also improved.

Further, according to the present invention, there is provided a magnetic bearing control device comprising: a rotating body; position detection means for detecting a radial position and/or axial position of the rotating body; magnetic bearing means for controlling the radial position and/or axial position by means of an electromagnet, based on the radial position and/or axial position detected by the position detection means; an exciting circuit including switching elements for effecting connection and disconnection between the electromagnet and a power source; electromagnet current detection means for detecting the electric current flowing through the electromagnet; electric current error calculation means for calculating an electric current error occurring between the detected current value detected by the electromagnet current detection means and an electric current command value; characterised by air gap length calculation means for calculating an air gap length between the electromagnet and the rotating body, based on the position of the rotating body detected by the position detection means; relatingmeans for relating in advance a coefficient for compensating the inductance of the electromagnet with the air gap length; coefficient calculation means for calculating the coefficient from the air gap length calculated by the air gap length calculation means based on the relating means; compensation means for compensating the electric current error based on the coefficient calculated by the coefficient calculation means; and pulse width calculation means for calculating a pulse width used for performing pulse control on the switching elements, based on an output value compensated by the compensation means.

The air gap length between the electromagnet and the rotating body is calculated based on the position of the rotating body detected by the position detection means. In the relating means, the coefficient for compensating the electromagnet inductance is related in advance with the air gap length. The relationship may be stored in the memory or the like as a characteristic curve, or may be stored in an approximated form as a line graph.

Further, the relationship may also be stored as a table. In the coefficient calculation means, the coefficient is calculated from the air gap length calculated by the air gap length calculation means, based on the relating means. Then, the electric current error is compensated based on this coefficient. The pulse width is calculated based on the compensation result.

Due to this structure, the responsiveness of the electromagnet current is improved. Note that the effect of the present invention can be improved further by a combination with the above-mentioned compensation performed according to the size of the electric current flowing through the electromagnet.

Embodiments of the present invention will now be described by way of further example only and with reference to the accompanying drawings, in which:-

Fig. 1 is a diagram showing a relationship between an inductance compensation gain KL and an electromagnet current IL;
Fig. 2 is a diagram showing a relationship between an inductance compensation gain Kg and an air gap length 1;
Fig. 3 is a diagram showing a relationship between a position of a rotating body and an air gap length 1;
Fig. 4 is a sectional view of a turbo molecular pump;
Fig. 5 is a cross-sectional view of a radial electromagnet;
Fig. 6 is a longitudinal sectional view of an axial electromagnet;
Fig . 7 is an example of an exciting circuit of a magnetic bearing;
Fig. 8 is a time chart showing the control when the current command value is larger than the detection value; and
Fig. 9 is a time chart showing the control when the current command value is smaller than the detection value.

An embodiment of the present invention will now be described. A diagram showing an overall construction of the embodiment of the present invention is as shown in Fig. 7.

First, when an electric current command value IR is larger than a detected electromagnet current IL (mode 1), a calculation equation expanded by software in a control circuit 137 based on Equation 1 is as expressed by Equation 3.

[Equation 3]

$$\hat{I}L(n+1) = \frac{P(n) \times Vd \times Tp(n)}{Lm} + \frac{(Lm - RmTs)}{Lm} IL(n) \qquad (P(n) = 1.0)$$

Here, P(n) indicates a polarity, and IL (a hatted code) (n + 1) indicates an estimated value of the electromagnet current at a timing following a timing n. Similarly, when the electric current command value IR is smaller than the detected electromagnet current IL (mode 2), the calculation equation expanded by the software in the control circuit 137 is as expressed by Equation 4.

[Equation 4]

$$\hat{I}L(n+1) = \frac{P(n) \times Vd \times Tp(n)}{Lm} + \frac{(Lm - RmTs)}{Lm} IL(n) \qquad (P(n) = -1.0)$$

Thus, Equation 5 holds due to Equation 3 and Equation 4.

[Equation 5]

$$\text{When } \hat{I}L(n+1) = IL(n), \ Tp(n) = \frac{IL(n)RmTs}{Vd}$$

Accordingly, when the pulse width time Tp(n) at the timing n is small, the electric current decreases even in mode 1.
Further, Equation 6 holds.

[Equation 6]

$$\text{When } Tp = 0, \ \Delta I = \frac{RmTs}{Lm} IL(n)$$

The pulse width time Tp(n + 1) can be expressed alternatively by Equation 7.

**[Equation 7]**

$$Tp(n+1) = P(n+1)\frac{KA \times Lm}{Vd}\left\{ IR(n+1) - \frac{P(n) \times Vd \times Tp(n)}{Lm} - \frac{Lm - 2RmTs}{Lm} IL(n) \right\}$$

Note that KA indicates a feedback gain, the electric current command value IR (n + 1) indicates the electric current command value at the timing following the timing n, and IL(n) indicates the electromagnet current value surveyed in the present cycle.
It is required that the P(n + 1) polarity is configured such that the pulse width time Tp(n + 1) becomes a positive value. Thus, P(n + 1) > 0 is mode 1, while P(n + 1) $\leq$ 0 is mode 2.
The electromagnet inductance Lm is obtained using a number of coil windings N, the air gap length 1, a gap area S and a permeability as expressed by Equation 8.

[Equation 8]

$$Lm = N^2 \frac{S}{l} \mu$$

$$\mu = f(i)$$

Due to hysteresis properties, the permeability $\mu$ varies significantly depending on the electromagnet current IL. Thus, the pulse width time Tp(n + 1) can be expressed differently by Equation 9.

**[Equation 9]**

$$Tp(n+1) = P(n+1)\frac{KA \times Lo}{Vd}\left\{(IR(n+1) - IL(n)) \times KL - \frac{P(n) \times Vd \times Tp(n)}{Lo} + \frac{2RmTs}{Lo}IL(n)\right\}.$$

KL indicates inductance compensation gain, which is a compensation coefficient for compensating an electromagnet inductance standard value $L_0$ according to the size of the detected electromagnet current IL. The larger the steady-state current value of the electromagnet current IL, the more the electromagnet inductance Lm is reduced. Thus, it is necessary to reduce the inductance compensation gain.

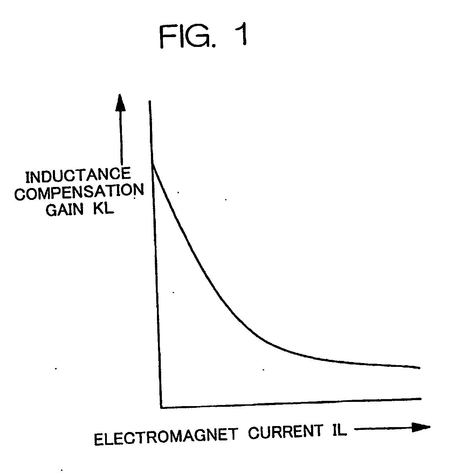

The relationship between the inductance compensation gain KL and the electromagnet current IL is shown in Fig. 1. Note that the curve indicating this relationship may be approximated as a line graph. Alternatively, the relationship may also be stored in the memory as a table.

In this way, the electromagnet inductance Lm is compensated according to the size of the detected electromagnet current IL, and the pulse width time Tp is calculated, so that the responsiveness of the electromagnet current IL is improved. Since the responsiveness is thus improved, the rotating body 103 becomes less apt to oscillate, so that the control rigidity of the rotating body 103 can be increased. The convergence in the case in which the rotating body 103 is displaced by external disturbance is also improved.

Note that there is an inverse relationship between the electromagnet inductance Lm and the air gap length 1 as expressed by Equation 8. Thus, it is desirable for the changes in the electromagnet inductance Lm, caused by the changes in the air gap length 1 according to the position of the rotating body 103, to be compensated.

Thus, Equation 9 is further expanded as expressed by Equation 10.

**[Equation 10]**

$$Tp(n+1) = P(n+1)\frac{KA \times Lo}{Vd}\left\{(IR(n+1) - IL(n)) \times KL \times Kg - \frac{P(n) \times Vd \times Tp(n)}{Lo} + \frac{2RmTs}{Lo}IL(n)\right\}$$

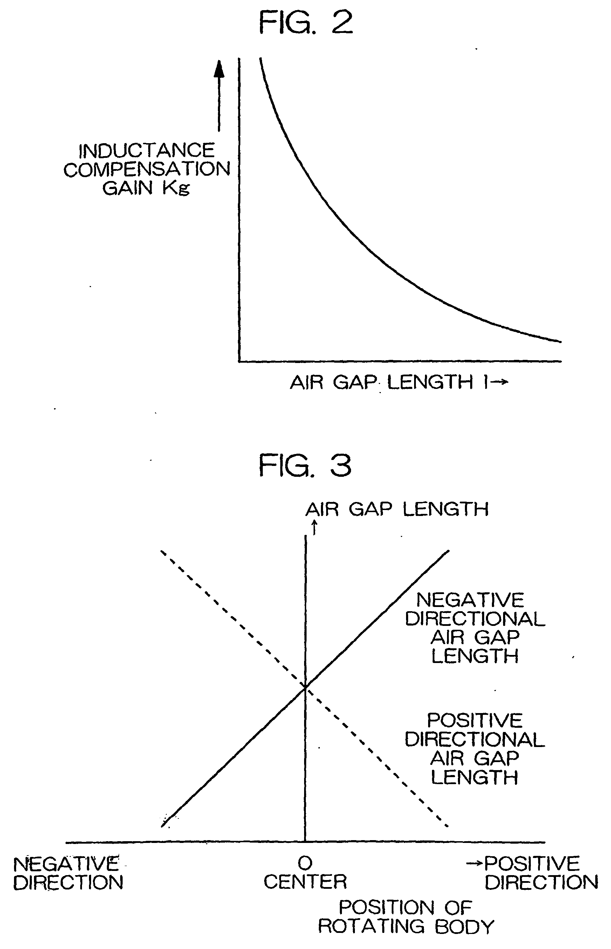

Here, Kg indicates an inductance compensation gain for the air gap length 1. The relationship between the inductance compensation gain Kg and the air gap length 1 is shown in Fig. 2. Note that the curve indicating this relationship may also be approximated as a line graph. Alternatively, the relationship may also be stored in the memory as a table.

Further, by turning the relationship between the position of the rotating body 103 and the air gap length 1 into a graph in advance as shown in Fig. 3, the air gap length 1 can be obtained easily from the position of the rotating body 103 obtained from an upper radial sensor 105b, a lower radial sensor 107b, and an axial sensor 109b.

In this way, the electromagnet inductance Lm is compensated according to the size of the air gap length 1, and the pulse width time Tp is calculated, whereby the responsiveness of the electromagnet current IL is improved.

Further, as expressed by Equation 10, by performing the compensation of the electromagnet inductance Lm together with the above-mentioned compensation (i.e., the inductance compensation gain KL) according to the size of the electromagnet current IL, and the compensation (i.e., the inductance compensation gain Kg) according to the size of the air gap length 1, the responsiveness of the electromagnet current IL is improved even further.

As described above, in accordance with the present invention, the electromagnet inductance is compensated according to the size of the electromagnet current detected by the relating means, and the pulse width is calculated based on the compensation result, whereby the responsiveness of the electromagnet current is improved. Thus, the rotating body becomes less apt to oscillate, so that the control rigidity of the rotating body can be increased. The convergence in the case in which the rotating body is displaced by external disturbance is also improved.

**Claims**

1. A magnetic bearing control device comprising:

    a rotating body (103);
    position detection means (105b, 107b, 109b) for detecting a radial position and/or axial position of the rotating body (103);

magnetic bearing means (105a, 105b, 107a, 107b, 109a, 109b) for controlling the radial position and/or axial position by means of an electromagnet (105a, 107a, 109a), based on the radial position and/or axial position detected by the position detection means (105b, 107b, 109b);

an exciting circuit (110) including switching elements (131, 132) for effecting connection and disconnection between the electromagnet (105a, 107a, 109a) and a power source (133);

electromagnet current detection means (139) for detecting the electric current flowing through the electromagnet (105a, 107a, 109a);

electric current error calculation means (137) for calculating an electric current error occurring between the detected current value detected by the electromagnet current detection means (139) and an electric current command value; **characterised by**:

relating means (137) for relating in advance a coefficient for compensating the inductance of the electromagnet (105a, 107a, 109a) with the size of the electric current flowing through the electromagnet (105a, 107a, 109a);

coefficient calculation means (137) for calculating the coefficient from the detected current value based on the relating means (137);

compensation means (137) for compensating the electric current error based on the coefficient calculated by the coefficient calculation means (137); and

pulse width calculation means (137) for calculating a pulse width used for performing pulse control on the switching elements (131, 132), based on an output value compensated by the compensation means (137).

2. A magnetic bearing control device comprising:

a rotating body (103);

position detection means (105b, 107b, 109b) for detecting a radial position and/or axial position of the rotating body (103);

magnetic bearing means (105a, 105b, 107a, 107b, 109a, 109b) for controlling the radial position and/or axial position by means of an electromagnet (105a, 107a, 109a), based on the radial position and/or axial position detected by the position detection means (105b, 107b, 109b);

an exciting circuit (110) including switching elements (131, 132) for effecting connection and disconnection between the electromagnet (105a, 107a, 109a) and a power source (133);

electromagnet current detection means (139) for detecting the electric current flowing through the electromagnet (105a, 107a, 109a);

electric current error calculation means (137) for calculating an electric current error occurring between the detected current value detected by the electromagnet current detection means (139) and an electric current command value; **characterised by**:

air gap length calculation means (137) for calculating an air gap length between the electromagnet (105a, 107a, 109a) and the rotating body (103), based on the position of the rotating body (103) detected by the position detection means (105b, 107b, 109b);

relating means (137) for relating in advance a coefficient for compensating the inductance of the electromagnet (105a, 107a, 109a) with the air gap length;

coefficient calculation means (137) for calculating the coefficient from the air gap length calculated by the air gap length calculation means (137) based on the relating means (137);

compensation means (137) for compensating the electric current error based on the coefficient calculated by the coefficient calculation means (137); and

pulse width calculation means (137) for calculating a pulse width used for performing pulse control on the switching elements (131, 132), based on an output value compensated by the compensation means (137).

**Patentansprüche**

1. Magnetlagersteuerungsvorrichtung, umfassend:

einen rotierenden Körper (103);

Positionserfassungsmittel (105b, 107b, 109b) zum Erfassen einer radialen Position und/oder axialen Position des rotierenden Körpers (103);

Magnetlagermittel (105a, 105b, 107a, 107b, 109a, 109b) zum Steuern der radialen Position und/oder axialen Position mit Hilfe eines Elektromagneten (105a, 107a, 109a), basierend auf der radialen Position und/oder axialen Position, die von dem Positionserfassungsmittel (105b, 107b, 109b) erfasst wird;

eine Erregerschaltung (110), die Schaltelemente (131, 132) zum Herstellen einer Verbindung und Trennung zwischen dem Elektromagneten (105a, 107a, 109a) und einer Energiequelle (133) enthält;

ein Elektromagnetstromerfassungsmittel (139) zum Erfassen des Stroms, der durch den Elektromagneten (105a, 107a, 109a) strömt;

ein Stromfehlerberechnungsmittel (137) zum Berechnen eines Stromfehlers, der zwischen dem erfassten Stromwert, der von dem Elektromagnetstromerfassungsmittel (139) erfasst wird, und einem Strombefehlswert auftritt; **gekennzeichnet durch**:

ein Bezugsmittel (137) zum In-Bezug-Bringen im Voraus eines Koeffizienten zum Kompensieren der Induktanz des Elektromagneten (105a, 107a, 109a) mit der Größe des Stroms, der **durch** den Elektromagneten (105a, 107a, 109a) strömt;

ein Koeffizientenberechnungsmittel (137) zum Berechnen des Koeffizienten aus dem erfassten Stromwert auf der Basis des Bezugsmittels (137);

ein Kompensationsmittel (137) zum Kompensieren des Stromfehlers auf der Basis des Koeffizienten, der von dem Koeffizientenberechnungsmittel (137) berechnet wird; und

ein Impulsbreitenberechnungsmittel (137) zum Berechnen einer Impulsbreite, die zur Ausführung einer Impulssteuerung an den Schaltelementen (131, 132) verwendet wird, basierend auf einem Ausgangswert, der von dem Kompensationsmittel (137) kompensiert wird.

2. Magnetlagersteuerungsvorrichtung, umfassend:

einen rotierenden Körper (103);

Positionserfassungsmittel (105b, 107b, 109b) zum Erfassen einer radialen Position und/oder axialen Position des rotierenden Körpers (103);

Magnetlagermittel (105a, 105b, 107a, 107b, 109a, 109b) zum Steuern der radialen Position und/oder axialen Position mit Hilfe eines Elektromagneten (105a, 107a, 109a), basierend auf der radialen Position und/oder axialen Position, die von dem Positionserfassungsmittel (105b, 107b, 109b) erfasst wird;

eine Erregerschaltung (110), die Schaltelemente (131, 132) zum Herstellen einer Verbindung und Trennung zwischen dem Elektromagneten (105a, 107a, 109a) und einer Energiequelle (133) enthält;

ein Elektromagnetstromerfassungsmittel (139) zum Erfassen des Stroms, der durch die Elektromagneten (105a, 107a, 109a) strömt;

ein Stromfehlerberechnungsmittel (137) zum Berechnen eines Stromfehlers, der zwischen dem erfassten Stromwert, der von dem Elektromagnetstromerfassungsmittel (139) erfasst wird, und einem Strombefehlswert auftritt; **gekennzeichnet durch**:

ein Luftspaltlängenberechnungsmittel (137) zum Berechnen einer Luftspaltlänge zwischen dem Elektromagneten (105a, 107a, 109a) und dem rotierenden Körper (103) auf der Basis der Position des rotierenden Körpers (103), die von dem Positionserfassungsmittel (105b, 107b, 109b) erfasst wird;

ein Bezugsmittel (137) zum In-Bezug-Bringen im Voraus eines Koeffizienten zum Kompensieren der Induktanz des Elektromagneten (105a, 107a, 109a) mit der Luftspaltlänge;

ein Koeffizientenberechnungsmittel (137) zum Berechnen des Koeffizienten aus der Luftspaltlänge, die von dem Luftspaltlängenberechnungsmittel (137) berechnet wird, auf der Basis des Bezugsmittels (137);

ein Kompensationsmittel (137) zum Kompensieren des Stromfehlers auf der Basis des Koeffizienten, der von dem Koeffizientenberechnungsmittel (137) berechnet wird; und

ein Impulsbreitenberechnungsmittel (137) zum Berechnen einer Impulsbreite, die zur Ausführung einer Impulssteuerung an den Schaltelementen (131, 132) verwendet wird, basierend auf einem Ausgangswert, der **durch** das Kompensationsmittel (137) kompensiert wird.

**Revendications**

1. Organe de commande à palier magnétique comprenant :

   un élément de rotation (103) ;

   un moyen de détection de position (105b, 107b, 109b) pour détecter une position radiale et/ou une position axiale de l'élément de rotation (103) ;

   un palier magnétique (105a, 105b, 107a, 107b, 109a, 109b) pour régler la position radiale et/ou la position axiale à l'aide d'un électroaimant (105a, 107a, 109a), sur la base de la position radiale et/ou de la position axiale détectée par le moyen de détection de position (105b, 107b, 109b);

   un circuit d'excitation (110) comprenant des éléments de commutation (131, 132) pour effectuer une connexion et une déconnexion entre l'électroaimant (105a, 107a, 109a) et une source d'alimentation (133) ;

   un moyen de détection du courant de l'électroaimant (139), pour détecter le courant électrique circulant à travers l'électroaimant (105a, 107a, 109a) ;

   un moyen de calcul d'erreur du courant électrique (137), pour calculer une erreur de courant électrique ayant lieu entre la valeur du courant détecté, laquelle est détectée par le moyen de détection du courant de l'électroaimant (139), et une valeur prescrite du courant électrique ; **caractérisé par**

   un moyen d'association (137) pour associer par avance un coefficient de compensation de l'inductance de l'électroaimant (105a, 107a, 109a) avec la force du courant électrique circulant à travers l'électroaimant (105a, 107a, 109a) ;

   un moyen de calcul de coefficient (137), pour calculer un coefficient à partir de la valeur de courant détectée sur la base du moyen d'association (137);

   un moyen de compensation (137), pour compenser l'erreur de courrant électrique sur la base du coefficient calculé par le moyen de calcul de coefficient (137) ; et

   un moyen de calcul de la largeur d'impulsion (137) pour calculer une largeur d'impulsion utilisée pour effectuer un réglage par impulsions au niveau des éléments de commutation (131, 132) sur la base d'une valeur de sortie compensée par le moyen de compensation (137).

2. Organe de commande à palier magnétique comprenant :

   un élément de rotation (103) ;

   un moyen de détection de position (105b, 107b, 109b) pour détecter une position radiale et/ou une position axiale de l'élément de rotation (103) ;

   un palier magnétique (105a, 105b, 107a, 107b, 109a, 109b) pour régler la position radiale et/ou la position axiale à l'aide d'un électroaimant (105a, 107a, 109a), sur la base de la position radiale et/ou de la position axiale détectée par le moyen de détection de position (105b, 107b, 109b);

   un circuit d'excitation (110) comprenant des éléments de commutation (131, 132) pour effectuer une connexion et une déconnexion entre l'électroaimant (105a, 107a, 109a) et une source d'alimentation (133) ;

un moyen de détection du courant de l'électroaimant (139), pour détecter le courant électrique circulant à travers l'électroaimant (105a, 107a, 109a) ;

un moyen de calcul d'erreur du courant électrique (137) pour calculer une erreur de courant électrique ayant lieu entre la valeur du courant détectée, laquelle est détectée par le moyen de détection du courant de l'électroaimant (139), et une valeur prescrite du courant électrique ; **caractérisé par**

un moyen de calcul de la longueur de l'entrefer (137) pour calculer une longueur de l'entrefer entre l'électroaimant (105a, 107a, 109a) et l'élément de rotation (103) sur la base de la position de l'élément de rotation (103) détectée par le moyen de détection de position (105b, 107b, 109b);

un moyen d'association (137) pour associer par avance un coefficient de compensation de l'inductance de l'électroaimant (105a, 107a, 109a) avec la longueur de l'entrefer ;

un moyen de calcul de coefficient (137) pour calculer le coefficient à partir de la longueur de l'entrefer calculée par le moyen de calcul de la longueur de l'entrefer (137) sur la base du moyen d'association (137) ;

un moyen de compensation (137) pour compenser l'erreur de courant électrique sur la base du coefficient calculé par le moyen de calcul de coefficient (137) ; et

un moyen de calcul de la largeur d'impulsion (137) pour calculer une largeur d'impulsion utilisée pour effectuer un réglage par impulsions au niveau des éléments de commutation (131, 132) sur la base d'une valeur de sortie compensée par le moyen de compensation (137).

## FIG. 1

INDUCTANCE
COMPENSATION
GAIN KL

ELECTROMAGNET CURRENT IL ⟶

# FIG. 2

INDUCTANCE COMPENSATION GAIN Kg

AIR GAP LENGTH l →

# FIG. 3

AIR GAP LENGTH

NEGATIVE DIRECTIONAL AIR GAP LENGTH

POSITIVE DIRECTIONAL AIR GAP LENGTH

NEGATIVE DIRECTION

O CENTER

→ POSITIVE DIRECTION

POSITION OF ROTATING BODY

# FIG. 4

# FIG. 5

POSITIVE ← → NEGATIVE
DIRECTION    DIRECTION

# FIG. 6

# FIG. 7

ic POWER SOURCE CURRENT

POSITIVE POWER SOURCE

SW1

110

IL
COIL CURRENT

136

133

131

141

111

SW2

135

132

139

NEGATIVE POWER SOURCE

CONTROL CIRCUIT

137

# FIG. 8

## WHEN INCREASING CURRENT

# FIG. 9

WHEN DECREASING CURRENT

SWITCHING PERIOD

I L

SW1  ON
     OFF

SW2  ON
     OFF

Tp2

O                    T s